# EUROPÄISCHE PATENTSCHRIFT

(11) **EP 2 195 593 B1**
(45) Veröffentlichungstag und Bekanntmachung des Hinweises auf die Patenterteilung: **15.05.2019**
(21) Anmeldenummer: 08785476.6
(22) Anmeldetag: 09.08.2008
(51) Int. Cl.: A23L 3/36, A23L 3/44, F25B 21/02, F26B 5/06

(54) **VORRICHTUNG ZUM TEMPERIEREN VON GEFRIERGUT**
DEVICE FOR CONTROLLING THE TEMPERATURE OF PRODUCTS TO BE FROZEN
DISPOSITIF DE RÉGULATION THERMIQUE DE PRODUITS À LYOPHILISER

(30) Priorität: 28.08.2007 DE 102007040489
(43) Veröffentlichungstag der Anmeldung: 16.06.2010
(73) Patentinhaber: Vetter Pharma-Fertigung GmbH & Co. KG, 88212 Ravensburg (DE)
(72) Erfinder: BÖBST, Benjamin, 88441 Mittelbiberach (DE); BOETTGER, Frank, 88214 Ravensburg (DE)
(74) Vertreter: Kordel, Mattias
(86) Internationale Anmeldenummer: PCT/EP2008/006591
(87) Internationale Veröffentlichungsnummer: WO 2009/030341

(56) Entgegenhaltungen:
- EP-A- 1 464 401
- WO-A-89/12502
- DE-B1- 1 604 853
- GB-A- 1 017 116
- GB-A- 1 173 720
- US-A- 5 779 981
- US-A1- 2006 053 652
- US-B1- 6 341 490

## Beschreibung

Die Erfindung betrifft eine Vorrichtung und ein Verfahren zum Temperieren von Gefriergut gemäß Oberbegriff des Anspruchs 1 und des Anspruchs 6. Eine derartige Vorrichtung und ein derartiges Verfahren sind aus DE1604853 bekannt.

Vorrichtungen der hier angesprochenen Art sind bekannt. Sie werden zum Temperieren von Gefriergut in Gefriertrocknern eingesetzt. Bei bekannten Gefriertrocknern ist ein Magazin während des Gefriertrocknungsprozesses auf einer Stellfläche in dem Gefriertrockner angeordnet. Das Magazin umfasst vorzugsweise mehrere Aufnahmebereiche zur Aufnahme von Gefriergut, insbesondere von pharmazeutischen Lösungen, die in pharmazeutischen Behältnissen angeordnet sind. Die Stellplatte weist Kanäle auf, in denen temperierbares Medium, wie beispielsweise Silikonöl, zirkuliert. Über die Stellplatte wird das Magazin temperiert. Während des Gefriertrocknungsprozesses wird das Gefriergut zunächst eingefroren. Anschließend folgt eine Primärtrocknung, wobei das Eis des gefrorenen Gefrierguts, beispielsweise pharmazeutisches Lösungsmittel, sublimiert wird. Bei einer anschließenden Sekundärtrocknung wird der Wasseranteil in dem gefrorenen Gefriergut weiter verringert, sodass schließlich eine feste Substanz, das sogenannte Lyophilisat, zurückbleibt. Insbesondere pharmazeutische Lösungen lassen sich auf diese Weise schonend und lange konservieren und lassen sich bei Bedarf in einem Lösungsmittel, beispielsweise in Wasser, einfach wieder auflösen. Die verschiedenen Phasen, die das Gefriergut während des Gefriertrocknungsprozesses durchläuft, werden einerseits von der Temperatur des Gefrierguts und andererseits von dem Druck in dem Gefriertrockner gesteuert. Die Temperatur des Gefrierguts wird dabei, wie bereits erwähnt wurde, von dem in der Stellplatte vorgesehenen temperierbaren Medium gesteuert. Verschiedene pharmazeutische Lösungen benötigen aufgrund ihrer unterschiedlichen Zusammensetzungen unterschiedliche Temperatur- und Druckverläufe während des Gefriertrocknungsprozesses, um zu qualitativ hochwertigem Lyophilisat umgewandelt zu werden. Bei bekannten Gefriertrocknern ist eine große Anzahl an Versuchsdurchläufen notwendig, um den optimalen Druck- und Temperaturverlauf während des Gefriertrocknungsprozesses für eine neuentwickelte pharmazeutische Lösung herauszufinden. Dadurch dauert die Testphase einer Lösung für den Gefriertrocknungsprozess sehr lange.

Aufgabe der Erfindung ist es daher, eine Vorrichtung zum Temperieren von Gefriergut zu schaffen, welche die Testphase von zu trocknendem Gefriergut erheblich verkürzt.

Zur Lösung dieser Aufgabe wird eine Vorrichtung zum Temperieren von Gefriergut mit den Merkmalen des Anspruchs 1 vorgeschlagen. Sie zeichnet sich durch wenigstens ein Peltier-Element aus. Dieses ermöglicht es in vorteilhafter Weise, das Temperieren von Gefriergut während des Gefriertrocknungsprozesses äußert flexibel zu gestalten, sodass dadurch eine erhebliche Verkürzung der Testphase, insbesondere einer neu entwickelten pharmazeutischen Lösung bewirkt wird.

Die Vorrichtung zeichnet sich dadurch aus dass das wenigstens eine Peltier-Element zwischen wenigstens einem Aufnahmebereiche zur Aufnahme von Gefriergut aufweisenden Magazin und einer Stellplatte angeordnet ist. Durch diesen Aufbau werden ein besonders einfacher Aufbau und eine besonders kostengünstige Realisierung einer Vorrichtung zum Temperieren von Gefriergut realisiert.

Die Vorrichtung zeichnet sich dadurch aus dass wenigstens zwei Peltier-Elemente vorgesehen sind. Durch den Einsatz von wenigstens zwei Peltier-Elementen ist es möglich, während eines Gefriertrocknungsprozesses in unterschiedlichen Bereichen des Gefriertrockners verschiedene Temperaturen vorzusehen, wenigstens ein Magazin also selektiv zu temperieren. Es ist damit möglich, während eines einzigen Gefriertrocknungsprozesses wenigstens zwei Temperaturverläufe für ein Gefriergut oder auch mehrere Gefriergüter zu testen.

Auch zeichnet sie sich dadurch aus, dass einem Peltier-Element wenigstens ein Aufnahmebereich eines Magazins zugeordnet ist. Es ist also durchaus denkbar, einzelne Aufnahmebereiche, beispielsweise ein einzelnes Gefriergut, selektiv mittels eines Peltier-Elements zu temperieren.

Bei einer weiteren bevorzugten Vorrichtung ist vorgesehen, dass einem Peltier-Element mehrere Aufnahmebereiche eines Magazins zugeordnet sind. Beispielsweise ist es denkbar, verschiedene pharmazeutische Lösungen mit gleichem Temperaturverlauf dem Gefriertrocknungsprozess zu unterziehen.

Bevorzugt wird auch eine Vorrichtung, die sich dadurch auszeichnet, dass ein Peltier-Element genau einem Magazin zugeordnet ist. Insbesondere ist vorgesehen, dass das Peltier-Element die gleichen Abmessungen wie das Magazin aufweist.

Weiterhin wird eine Vorrichtung bevorzugt, die sich dadurch auszeichnet, dass ein Peltier-Element mehreren Magazinen zugeordnet ist. Zur besseren Unterscheidung von unterschiedlichen Gefriergütern kann beispielsweise ein Magazin ein bestimmtes Gefriergut aufweisen, ein anderes Magazin hingegen ein anderes Gefriergut.

Schließlich wird eine Vorrichtung bevorzugt, die sich dadurch auszeichnet, dass mehrere Peltier-Elemente einem Magazin zugeordnet sind. Insbesondere kann ein herkömmliches Magazin vorgesehen sein, wobei auf der Stellplatte mehrere Peltier-Elemente angeordnet sind, auf die das Magazin platziert wird. Über die mehreren Peltier-Elemente, die unterschiedlich stark abgekühlt oder erwärmt werden können, können so unterschiedliche Bereiche eines einzigen Magazins mit unterschiedlichen Temperaturen beaufschlagt werden.

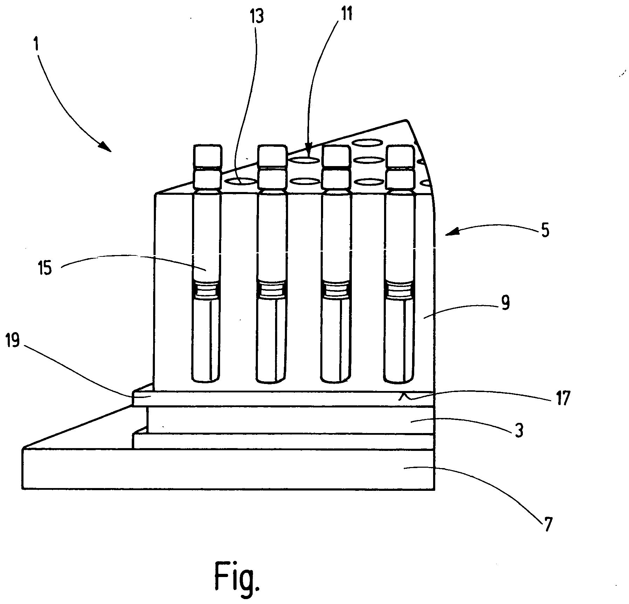

Die Erfindung wird im Folgenden anhand der Zeichnung näher erläutert. Es zeigt:
- Figur: eine perspektivische Darstellung eines Teilbereichs einer Vorrichtung zum Temperieren von Gefriergut.

Die einzige Figur zeigt eine perspektivische Darstellung einer Vorrichtung 1 zum Temperieren von Gefriergut während eines Gefriertrocknungsprozesses.

Die Vorrichtung 1 weist ein Peltier-Element 3 auf, welches zwischen einem Magazin 5 und einer Stellplatte 7 angeordnet ist. Die Stellplatte 7 ist Teil eines nicht dargestellten Gefriertrockners. Das Magazin 5 hingegen wird außerhalb des Gefriertrockners gelagert und befindet sich nur während eines Gefriertrocknungsprozesses in dem Gefriertrockner. Die Funktionsweise von Peltier-Elementen ist aus dem Stand der Technik hinreichend bekannt, sodass hier nicht näher darauf eingegangen werden soll.

Das Magazin 5 weist einen Grundkörper 9 und wenigstens einen, hier mehrere Aufnahmebereiche 11 auf, die als Aufnahmeöffnungen 13 in dem Grundkörper 9 realisiert sind. In den Aufnahmebereichen 11 des Magazins 5 ist Gefriergut 15 angeordnet. In der Figur ist vorgesehen, dass das Gefriergut 15, insbesondere eine pharmazeutische Lösung, beispielhaft in eine Doppelkammerspritze eingebracht ist.

Das Magazin 5 ist hier rein beispielhaft und kann beliebig ausgestaltet sein. Entscheidend ist lediglich, dass eine Grundfläche 17 des Magazins 5 auf einer Metallplatte 19 des Peltier-Elements 3 aufliegt, sodass durch das Peltier-Element 3 erzeugte Wärme oder Kälte von der Metallplatte 19 über die Grundfläche 17 und den Grundkörper 9 des Magazins 5 zu dem Gefriergut 15 geleitet wird.

Das Peltier-Element 3 ist vorzugsweise mit einer nicht dargestellten Ansteuereinrichtung verbunden, welche den Strom durch das Peltier-Element 3 und damit die Temperatur der Metallplatte 19 bestimmt.

Wenigstens ein Peltier-Element 3 ist vorzugsweise zwischen dem Magazin 5 und der Stellplatte 7 angeordnet. Insbesondere sind mehrere Peltier-Elemente 3 auf der Stellplatte 7 angeordnet, die jeweils über getrennte Ansteuereinrichtungen ansteuerbar sind und somit verschiedene Temperaturen aufweisen können. Auf mehrere Peltier-Elemente 3 kann entweder ein Magazin 5, welches die Peltier-Elemente 3 vorzugsweise vollständig bedeckt, oder aber mehrere kleinere Magazine 5 angeordnet sein. Insbesondere ist vorgesehen, dass genau einem Peltier-Element 3 ein Magazin 5 zugeordnet ist.

Das Magazin 5 hat dabei vorzugsweise die gleichen Abmessungen wie das Peltier-Element 3.

Das Magazin 5 weist, wie in der Figur dargestellt ist, vorzugsweise mehrere Aufnahmebereiche 11 auf. Einem Peltier-Element 3 können mehrere Aufnahmebereiche 11 eines oder mehrerer Magazine 5 zugeordnet sein. Es kann aber auch vorgesehen sein, einem Peltier-Element 3 genau einen Aufnahmebereich 11 zuzuordnen.

Ein Peltier-Element 3 kann auch mehreren Magazinen 5 zugeordnet sein, dies kann beispielsweise zur Unterscheidung vorteilhaft sein, wenn unterschiedliche Gefriergüter in unterschiedlichen Magazinen angeordnet sind, diese aber mit derselben Temperatur beaufschlagt werden sollen.

Wie oben bereits erwähnt wurde, können ein herkömmliches Magazin 5 und eine herkömmliche Stellplatte 7 für die hier vorgeschlagene Vorrichtung 1 zum Temperieren von Gefriergut 15 vorgesehen sein. Um die hier vorgeschlagene Vorrichtung 1 zu realisieren, ist es lediglich notwendig, ein oder mehrere Peltier-Elemente 3 auf der Stellfläche 7 vorzusehen und auf dem wenigstens einen Peltier-Element 3 mindestens ein Magazin 5 anzuordnen. Die Vorrichtung 1 zum Temperieren von Gefriergut ist somit besonders leicht und kostengünstig realisierbar.

Die vorliegende Erfindung bewirkt, dass einzelne Bereiche eines Gefriertrockners, insbesondere einzelne Bereiche eines Magazins 5 oder auch mehrerer Magazine 5 während eines einzigen Gefriertrocknungsprozesses selektiv temperiert, also die in den Magazinen angeordneten Gefriergüter mit unterschiedlichen Temperaturen beaufschlagt werden. Dadurch werden die Testphasen für neuentwickelte pharmazeutische Lösungen wesentlich verkürzt, da während eines einzigen Gefriertrocknungsprozesses mehrere Temperaturverläufe getestet werden können und somit eine wesentlich geringere Anzahl an Versuchsdurchläufen notwendig ist, bis der optimale Temperaturverlauf für eine Lösung gefunden wird. Auch ist es denkbar, unterschiedliche pharmazeutische Lösungen mit unterschiedlichen Temperaturen im selben Gefriertrocknungsprozess zu trocknen.

Das Peltier-Element 3 ist vorzugsweise mit der hier nicht dargestellten Ansteuereinheit verbunden, die mit einer ebenfalls nicht dargestellten Regeleinheit zusammenwirken kann, welche die Temperaturen des Gefrierguts 15 und/oder des Magazins 5 und/oder der Stellplatte 7 über Temperaturfühler misst und der Ansteuereinheit entsprechende Signale übermittelt. Die Ansteuereinheit kann entsprechend den Temperaturmesswerten den Strom für das Peltier-Element 3 erhöhen, verringern oder umpolen. Somit kann in vorteilhafter Weise ein besonders flexibler Regelkreislauf geschaffen werden, der außerdem einen stabilen Gefriertrocknungsprozess bewirkt, da auf Temperaturschwankungen des Gefrierguts 15 wesentlich schneller reagiert werden kann.

Wie oben bereits ausgeführt wurde, ermöglicht es die vorliegende Erfindung, unterschiedliche Bereiche innerhalb eines nicht dargestellten Gefriertrockners mit unterschiedlichen Temperaturen zu beaufschlagen und damit Gefriergut selektiv zu temperieren, sodass ein Gefriertrocknungszyklus wesentlich effizienter ist.

Entscheidend ist, dass in verschiedenen Bereichen des Gefriertrockners unterschiedliche Temperaturen herrschen können, also unterschiedliche Aufnahmebereiche eines Magazins und damit die darin befindlichen Gefriergüter mit unterschiedlichen Temperaturen beaufschlagt werden können. Die hier vorgeschlagene Vorrichtung 1 zum Temperieren von Gefriergut lässt sich durch wenigstens ein Peltier-Element 3, welches zwischen einer Stellplatte 7 und wenigstens einem Magazin 5 angeordnet ist, besonders einfach realisieren. Sie bewirkt ferner, dass die Testphase für den Gefriertrocknungsprozess, insbesondere für neuentwickelte pharmazeutische Lösungen, erheblich verkürzt wird. Ferner benötigt die Metallplatte 19 des Peltier-Elements 3 eine wesentlich kürzere Temperaturänderungszeit, sodass auf Temperaturschwankungen des Gefrierguts 15 schneller reagiert werden kann.

## Patentansprüche

1. Vorrichtung zum Temperieren von Gefriergut während eines Gefriertrocknungsprozesses, mit mehreren Peltier-Elementen (3), die zumindest einem Gefriergut aufnehmenden Magazin (5) zugeordnet sind, wobei das mindestens eine Peltier-Element (3) zwischen dem Magazin (5) und einer Stellplatte (7) angeordnet ist, **dadurch gekennzeichnet, dass** die die Vorrichtung nebeneinander angeordnete Peltier-Elemente (3) und getrennte Ansteuereinrichtungen aufweist, die mit den Peltier-Elementen (3) verbunden sind, dass die Vorrichtung derart ausgebildet ist, dass die Peltier-Elemente (3) verschiedene Temperaturen aufweisen können, und dass mittels der Peltier-Elemente (3) während eines Gefriertrocknungsprozesses einzelne Bereiche des Gefriertrockners mit unterschiedlichen Temperaturen beaufschlagbar sind.

2. Vorrichtung nach Anspruch 1, **dadurch gekennzeichnet, dass** einem Peltier-Element (3) mehrere Aufnahmebereiche (11) eines Magazins (5) zugeordnet sind.

3. Vorrichtung nach einem der Ansprüche 1 bis 2, **dadurch gekennzeichnet, dass** ein Peltier-Element (3) genau einem Magazin (5) zugeordnet ist.

4. Vorrichtung nach einem der Ansprüche 1 bis 3, **dadurch gekennzeichnet, dass** ein Peltier-Element (3) mehreren Magazinen (5) zugeordnet ist.

5. Vorrichtung nach einem der Ansprüche 1 bis 4, **dadurch gekennzeichnet, dass** mehrere Peltier-Elemente (3) einem Magazin (5) zugeordnet sind.

6. Verfahren zum Gefriertrocknen von Gefriergut mittels einer mehrere Peltier-Elemente (3) aufweisenden Vorrichtung nach einem der Ansprüche 1 bis 5, **dadurch gekennzeichnet, dass** die Peltier-Elemente (3) jeweils über getrennte Ansteuereinrichtungen derart angesteuert werden, sodass sie unterschiedliche Temperaturen aufweisen, wodurch während eines einzigen Gefriertrocknungsprozesses unterschiedliche Bereiche des Magazins (5) unterschiedliche Temperaturen aufweisen und das Gefriergut selektiv temperiert wird.

7. Verfahren nach Anspruch 6, **dadurch gekennzeichnet, dass** der Temperaturverlauf des Gefrierguts während des Gefriertrocknungsprozesses geregelt wird.

8. Verfahren nach Anspruch 7, **dadurch gekennzeichnet, dass** die Temperaturverlaufregelung in Abhängigkeit der während des Gefriertrocknungsprozesses überwachten Temperatur des Gefrierguts und/oder eines das Gefriergut aufnehmenden Magazins und/oder einer Stellplatte, auf der die Peltier-Elemente angeordnet sind, erfolgt.

9. Verfahren nach einem der vorhergehenden Ansprüche, **dadurch gekennzeichnet, dass** mehrere Gefriergüter während eines einzigen Gefriertrocknungsprozesses mit unterschiedlichen Temperaturverläufen getrocknet werden.

10. Verfahren nach Anspruch 9, **dadurch gekennzeichnet, dass** es sich um jeweils gleiche Gefriergüter handelt.

11. Verfahren nach Anspruch 9, **dadurch gekennzeichnet, dass** es sich um jeweils unterschiedliche Gefriergüter handelt.

## Claims

1. Device for controlling the temperature of a product to be frozen during a freeze drying procedure, said device having multiple Peltier elements (3) that are assigned to at least one magazine (5) that receives a product that is to be frozen, wherein the at least one Peltier element (3) is arranged between the magazine (5) and a placement plate (7), **characterised in that** the device comprises Peltier elements (3) that are arranged adjacent to one another and separate control devices that are connected to the Peltier elements (3), **in that** the device is configured in such a manner that the Peltier elements (3) may comprise different temperatures and **in that** different temperatures may be applied to individual regions of the freeze dryer by means of the Peltier elements (3) during a freeze drying procedure.

2. Device according to claim 1, **characterised in that** multiple receiving regions (11) of a magazine (5) are assigned to a Peltier element (3).

3. Device according to any one of claims 1 to 2, **characterised in that** one Peltier element (3) is assigned to precisely one magazine (5).

4. Device according to any one of claims 1 to 3, **characterised in that** one Peltier element (3) is assigned to multiple magazines (5).

5. Device according to any one of claims 1 to 4, **characterised in that** multiple Peltier elements (3) are assigned to one magazine (5).

6. Method for freeze drying a product to be frozen by means of a device according to any one of claims 1 to 5, said device comprising multiple Peltier elements (3), **characterised in that** the Peltier elements (3) are each controlled via separate control devices in such a manner that said Peltier elements comprise different temperatures, as a result of which during a single freeze drying procedure different regions of the magazine (5) comprise different temperatures and the temperature of the product to be frozen is selectively controlled.

7. Method according to claim 6, **characterised in that** the temperature profile of the product to be frozen is controlled during the freeze drying procedure.

8. Method according to claim 7, **characterised in that** the temperature profile regulation is performed depending on the temperature of the product to be frozen and/or the temperature of a magazine that receives the product to be frozen and/or the temperature of a placement plate on which the Peltier elements are arranged, said temperature being monitored during the freeze drying procedure.

9. Method according to any one of the preceding claims, **characterised in that** multiple products to be frozen are dried at different temperature profiles during a single freeze drying procedure.

10. Method according to claim 9, **characterised in that** the products to be frozen are equal in each case.

11. Method according to claim 9, **characterised in that** the products to be frozen are different in each case.

## Revendications

1. Dispositif de régulation thermique de produits à lyophiliser pendant un processus de lyophilisation, comprenant plusieurs éléments Peltier (3), qui sont associés à au moins un magasin (5) recevant des produits à lyophiliser, l'au moins un élément Peltier (3) étant disposé entre le magasin (5) et une plaque de réglage (7), **caractérisé en ce que** le dispositif présente des éléments Peltier (3) disposés les uns à côté des autres et des moyens de commande séparés qui sont reliés aux éléments Peltier (3), **en ce que** le dispositif est réalisé de telle manière que les éléments Peltier (3) peuvent présenter différentes températures, et **en ce que**, au moyen des éléments Peltier (3), différentes zones du lyophilisateur peuvent être soumises à l'effet de différentes températures pendant un processus de lyophilisation.

2. Dispositif selon la revendication 1, **caractérisé en ce que** plusieurs zones de réception (11) d'un magasin (5) sont associées à un élément Peltier (3).

3. Dispositif selon l'une des revendications 1 et 2, **caractérisé en ce qu'**un élément Peltier (3) est associé à exactement un magasin (5).

4. Dispositif selon l'une des revendications 1 à 3, **caractérisé en ce qu'**un élément Peltier (3) est associé à plusieurs magasins (5).

5. Dispositif selon l'une des revendications 1 à 4, **caractérisé en ce que** plusieurs éléments Peltier (3) sont associés à un magasin (5).

6. Procédé de lyophilisation de produits à lyophiliser au moyen d'un dispositif présentant plusieurs éléments Peltier (3) selon l'une des revendications 1 à 5, **caractérisé en ce que** les éléments Peltier (3) sont commandés respectivement par le biais de moyens de commande séparés de manière à présenter des températures différentes, moyennant quoi, pendant un unique processus de lyophilisation, différentes zones du magasin (5) présentent différentes températures et les produits à lyophiliser subissent une régulation thermique de manière sélective.

7. Procédé selon la revendication 6, **caractérisé en ce que** l'évolution de la température des produits à lyophiliser est régulée pendant le processus de lyophilisation.

8. Procédé selon la revendication 7, **caractérisé en ce que** la régulation de l'évolution de la température est effectuée en fonction de la température des produits à lyophiliser surveillée pendant le processus de lyophilisation et/ou d'un magasin recevant les produits à lyophiliser et/ou d'une plaque de réglage, sur laquelle les éléments Peltier sont disposés.

9. Procédé selon l'une des revendications précédentes, **caractérisé en ce que** plusieurs produits à lyophiliser sont desséchés avec différentes évolutions de température pendant un unique processus de lyophilisation.

10. Procédé selon la revendication 9, **caractérisé en ce qu'**il s'agit de produits à lyophiliser respectivement identiques.

11. Procédé selon la revendication 9, **caractérisé en ce qu'**il s'agit de produits à lyophiliser respectivement différents.
